# FASCICULE DE BREVET EUROPEEN

(11) **EP 3 956 225 B1**
(45) Date de publication et mention de la délivrance du brevet: **18.10.2023**
(21) Numéro de dépôt: 20715928.6
(22) Date de dépôt: 08.04.2020
(51) Int. Cl.: B64D 33/02, F02C 7/042, F02K 1/66

(54) **ENTRÉE D'AIR DE NACELLE DE TURBORÉACTEUR COMPRENANT DES AUBES DE REDRESSEUR**
LUFTEINLASS FÜR TURBOTRIEBWERKSGONDEL MIT GLEICHRICHTERSCHAUFELN
AIR INLET FOR TURBOJET ENGINE NACELLE COMPRISING RECTIFIER VANES

(30) Priorité: 17.04.2019 FR 1904094
(43) Date de publication de la demande: 23.02.2022
(73) Titulaire: SAFRAN AIRCRAFT ENGINES, 75015 Paris (FR)
(72) Inventeur: BINDER, Anthony, 77550 MOISSY-CRAMAYEL (FR); MINCU, Daniel-Ciprian, 77550 MOISSY-CRAMAYEL (FR)
(74) Mandataire: Argyma
(86) Numéro de dépôt international: PCT/EP2020/060040
(87) Numéro de publication internationale: WO 2020/212228

(56) Documents cités:
- EP-A2- 0 516 468
- GB-A- 1 252 193
- GB-A- 1 565 212
- US-A- 3 736 750
- US-A1- 2018 100 434

## Description

### DOMAINE TECHNIQUE DE L'INVENTION

La présente invention concerne le domaine des turboréacteurs d'aéronef et vise plus particulièrement un procédé d'utilisation d'un turboréacteur d'aéronef.

De manière connue, un aéronef comporte un ou plusieurs turboréacteurs pour permettre sa propulsion par accélération d'un flux d'air qui circule d'amont en aval dans le turboréacteur.

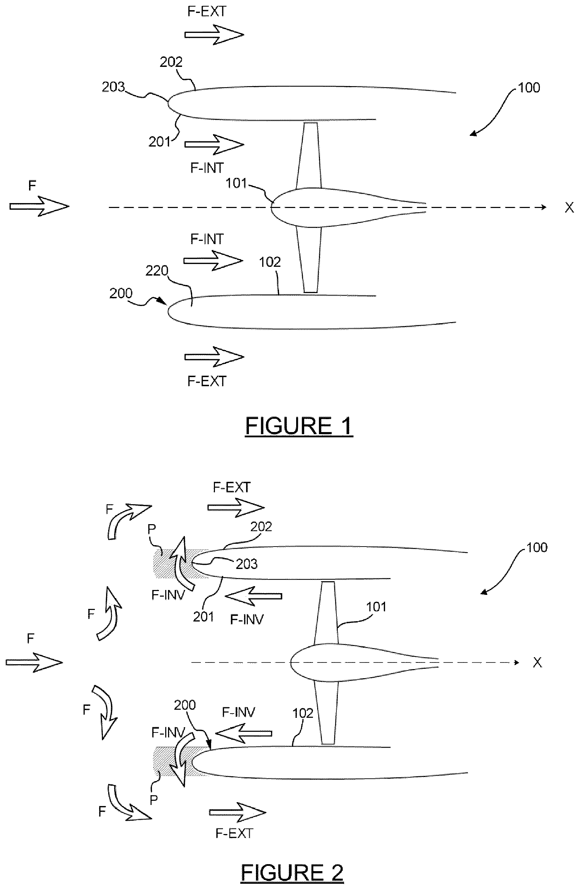

En référence à la figure 1, il est représenté un turboréacteur 100 s'étendant selon un axe X et comportant une soufflante 101 montée rotative autour de l'axe X dans une virole extérieure 102 afin d'accélérer, lors de la poussée du turboréacteur 100, un flux d'air circulant d'amont vers l'aval dans le turboréacteur 100, dit flux d'air intérieur F-INT. Par la suite, les termes « amont » et « aval » sont définis par rapport à la circulation du flux d'air intérieur F-INT.

De manière connue, le turboréacteur 100 comprend une nacelle comportant à son extrémité amont une entrée d'air 200 comportant une paroi intérieure 201 tournée vers l'axe X et une paroi extérieure 202 opposée à la paroi intérieure 201. Les parois 201, 202 sont reliées par une lèvre d'entrée d'air 203, comportant un bord d'attaque, de manière à former une cavité annulaire 220. L'entrée d'air 200 possède un profil aérodynamique qui permet de séparer un flux d'air amont F en le flux d'air intérieur F-INT guidé par la paroi intérieure 201 et un flux d'air extérieur F-EXT guidé par la paroi extérieure 202. Par la suite, les termes « intérieur » et « extérieur » sont définis radialement par rapport à l'axe X du turboréacteur 100.

Pour réduire la distance de freinage d'un aéronef, notamment lors de l'atterrissage, il est connu d'intégrer dans une nacelle un système d'inversion de poussée qui permet de modifier l'orientation du flux d'air à l'échappement de manière à réaliser une phase d'inversion de poussée. De manière connue, une phase d'inversion de poussée est réalisée par une ouverture de trappes/grilles dans la veine secondaire, en aval des raidisseurs, afin de conduire les flux d'air vers l'extérieur de manière radiale ou vers l'amont.

Pour un turboréacteur à fort taux de dilution, la nacelle possède un diamètre important et il n'est pas souhaité d'intégrer un système d'inversion de poussée classique étant donné que cela pénaliserait de manière importante la masse, l'encombrement et la trainée du turboréacteur.

Pour permettre une phase d'inversion de poussée, une autre solution consiste à prévoir une soufflante à pas variable, connue sous son abréviation anglaise « Variable Pitch Fan » ou VPF de manière à permettre d'inverser le flux d'air circulant dans la veine secondaire d'un turboréacteur et ainsi créer une poussée inverse permettant la décélération de l'aéronef lors de l'atterrissage.

En référence à la figure 2, lors d'une phase d'inversion de poussée, un flux d'air inverse F-INV circule d'aval en amont dans le turboréacteur 100, c'est-à-dire, inversement au flux d'air intérieur F-INT de la figure 1. Plus précisément, le flux d'air inverse F-INV circule entre la tête des aubes de soufflante 101 et la virole extérieure 102. Le flux d'air inverse F-INV est guidé vers l'amont par la paroi intérieure 201. Ce flux d'air inverse F-INV s'oppose alors au flux d'air amont F, ce qui permet la phase d'inversion de poussée.

En pratique, comme illustré à la figure 2, lors d'une phase d'inversion de poussée, le flux d'air inverse F-INV est vrillé sous l'action de la rotation de la soufflante 101 de manière azimutale. Il en résulte que le flux d'air inverse F-INV ne circule pas dans la même direction que le flux d'air amont F, ce qui réduit les performances de la phase d'inversion de poussée. En outre, une partie du flux d'air inverse F-INV contourne le profil aérodynamique de l'entrée d'air 200 selon une direction sensiblement radiale, ce qui entraîne l'apparition d'une zone de dépression locale P au voisinage de la lèvre d'entrée d'air 203. Une telle dépression locale P génère une aspiration vers l'amont, c'est-à-dire, une force qui s'oppose à la poussée inverse. Dans les faits, ce phénomène réduit la poussée inverse de manière très importante.

L'invention vise ainsi à réduire ce phénomène afin d'augmenter les performances du turboréacteur lors de la phase d'inversion de poussée sans affecter les performances dudit aéronef lors de la poussée.

On connaît de l'art antérieur par la demande de brevet US3736750A1 une entrée d'air comprenant des portions d'anneau mobiles entre une position de croisière, de décollage et d'atterrissage afin de réduire le bruit émis. De telles portions d'anneau ne favorisent pas la phase d'inversion de poussée, qui plus est pour un turboréacteur à fort taux de dilution, pour lequel un système d'inversion de poussée à trappes est lourd et encombrant.

### PRESENTATION DE L'INVENTION

L'invention concerne un procédé d'utilisation d'un turboréacteur d'aéronef selon la revendication 1.

Grâce à l'invention, des aubes de redresseur sont déployées afin de redresser le flux d'air inverse qui circule au voisinage de la paroi intérieure. La giration d'une partie du flux d'air inverse est ainsi réduite voire éliminée de manière à s'opposer de manière directe au flux d'air axial afin d'obtenir une phase d'inversion de poussée optimale. Ainsi, à la manière d'aubes du type OGV placées en aval de la soufflante et utilisées lors de la poussée, les aubes de redresseur de l'entrée d'air, en amont de la soufflante, permettent un redressement optimal lors de la phase d'inversion de poussée pour redresser le flux d'air inverse issu de la soufflante.

En outre, comme le flux d'air redressé est orienté axialement, cela permet de favoriser un décollement au niveau de la lèvre d'entrée d'air et ainsi améliore la poussée par comparaison à l'art antérieur en éliminant la formation d'une dépression.

Certains aspects préférés de l'invention sont définis dans les revendications dépendantes.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en coupe longitudinale d'une nacelle de turboréacteur en poussée, selon l'art antérieur,
La figure 2 est une représentation schématique en coupe longitudinale d'une nacelle de turboréacteur en inversion de poussée, selon l'art antérieur,
La figure 3 est une représentation schématique en coupe longitudinale d'une nacelle de turboréacteur en poussée, selon l'invention,
La figure 4 est une représentation schématique en coupe longitudinale d'une nacelle de turboréacteur en inversion de poussée, selon l'invention,
La figure 5 est une représentation schématique en coupe transversale d'une entrée d'air comprenant une rangée d'aubes de redresseur sur la lèvre d'entrée d'air en position escamotée,
La figure 6 est une représentation schématique en coupe transversale d'une entrée d'air comprenant une rangée d'aubes de redresseur sur la lèvre d'entrée d'air en position déployée,
La figure 7A et
La figure 7B sont des représentations schématiques en coupe longitudinale d'une entrée d'air comprenant une aube de redresseur sur la lèvre d'entrée d'air selon une première position escamotée et une deuxième position déployée,
La figure 7C est une représentation schématique en coupe longitudinale d'une entrée d'air comprenant une aube de redresseur sur laquelle est solidarisée un organe de couverture,
La figure 8 est une représentation schématique partielle de l'entrée d'air dans un plan de révolution lorsque les aubes de redresseur sont en position déployée,
La figure 9A,
La figure 9B,
La figure 9C et
La figure 9D sont des représentations schématiques de cinématiques de déploiement d'une aube de redresseur en rotation,
La figure 10A,
La figure 10B,
La figure 10C et
La figure 10D sont des représentations schématiques de cinématiques de déploiement d'une aube de redresseur en translation selon un axe de déploiement incliné par rapport à la direction radiale,
La figure 11A et
La figure 11B sont des représentations schématiques d'une entrée d'air comportant un dispositif de déplacement passif.

### DESCRIPTION DETAILLEE DE L'INVENTION

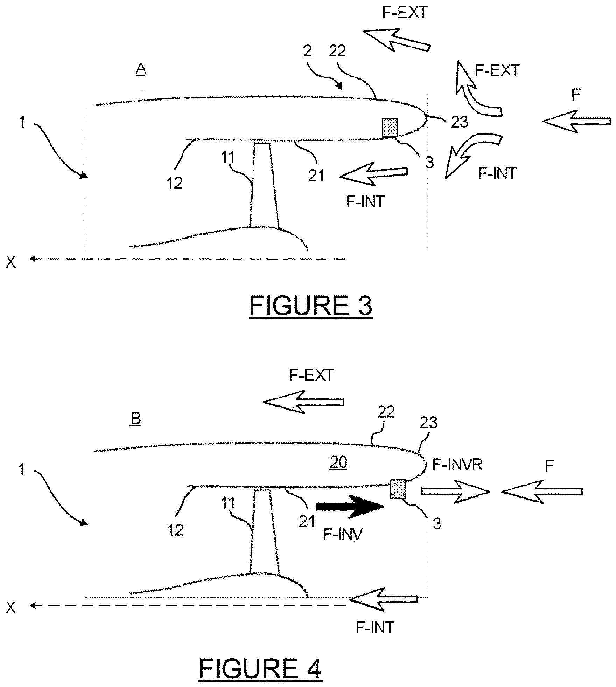

En référence aux figures 3 et 4, il est représenté un turboréacteur 1 selon l'invention s'étendant selon un axe X orienté de l'amont vers l'aval et comprenant une soufflante 11 montée rotative autour de l'axe X dans une virole extérieure 12 définissant une veine d'air. De manière connue, la soufflante 11 est configurée, lors d'une phase de poussée, pour accélérer un flux d'air circulant de l'amont vers l'aval dans le turboréacteur 1, dit flux d'air intérieur F-INT (Figure 3), et lors d'une phase d'inversion de poussée, pour accélérer un flux d'air circulant de l'aval vers l'amont dans le turboréacteur 1, dit flux d'air inverse F-INV (Figure 4). En pratique, le flux d'air inverse F-INV circule d'aval en amont dans une portion radialement extérieure de la veine d'air, en particulier, sur 1/3 du rayon de la veine d'air. Un flux d'air intérieur F-INT circule toujours d'amont en aval dans une portion radialement intérieure de la veine d'air, en particulier, sur 2/3 du rayon de la veine d'air. Le flux d'air intérieur F-INT assure un débit suffisant pour éviter tout phénomène de pompage du turboréacteur.

Comme illustré sur la figure 3, le turboréacteur 1 comprend une nacelle qui comprend à son extrémité amont une entrée d'air 2 s'étendant de manière circonférentielle autour de l'axe X et comprenant une paroi intérieure 21, tournée vers l'axe X et configurée pour guider le flux d'air intérieur F-INT et le flux d'air inverse F-INV, et une paroi extérieure 22, opposée à la paroi intérieure 21 et configurée pour guider un flux d'air extérieur F-EXT. Les parois 21, 22 sont reliées par une lèvre d'entrée d'air 23, comportant un bord d'attaque, formant une cavité annulaire 20.

Dans cet exemple, le turboréacteur 1 comporte des moyens d'inversion de poussée, une soufflante 11 à pas variable, connue sous son abréviation anglaise « Variable Pitch Fan » ou VPF de manière à permettre d'inverser le flux d'air circulant dans le turboréacteur 1 et ainsi de créer une poussée inverse permettant la décélération de l'aéronef lors de l'atterrissage.

Selon l'invention, en référence aux figures 3 et 4, l'entrée d'air 2 comprend une pluralité d'aubes de redresseur 3, chaque aube de redresseur 3 étant montée mobile entre :
- une position escamotée A pour favoriser la phase de poussée et
- une position déployée B dans laquelle l'aube de redresseur 3 s'étend en saillie de la paroi intérieure 21 selon une direction radialement intérieure afin de redresser le flux d'air inverse F-INV de la paroi intérieure 21 pour favoriser la phase d'inversion de poussée.

Ainsi, l'entrée d'air 2 permet de remplir deux rôles différents lors de la poussée et lors de la poussée inverse. Dans la position escamotée A, l'aube de redresseur 3 n'affecte pas les performances aérodynamiques du bord d'attaque 23 qui possède un profil aérodynamique. La poussée est ainsi optimale.

Suite à son déplacement dans la position déployée B, chaque aube de redresseur 3 permet de redresser le flux d'air F-INV qui a été préalablement vrillé par la soufflante 11 lors d'une phase d'inversion de poussée. Un flux d'air inverse redressé F-INVR circule ainsi sur la paroi intérieure 21 de l'entrée d'air 21 qui s'oppose de manière optimale avec le flux d'air amont F. Les performances de la phase d'inversion de poussée sont optimales.

Selon l'invention, les aubes de redresseur 3 remplissent pour la phase d'inversion de poussée, une fonction analogue aux aubes situées dans la veine secondaire et connues de l'homme du métier sous l'abréviation anglaise « Outlet Guide Vane ».

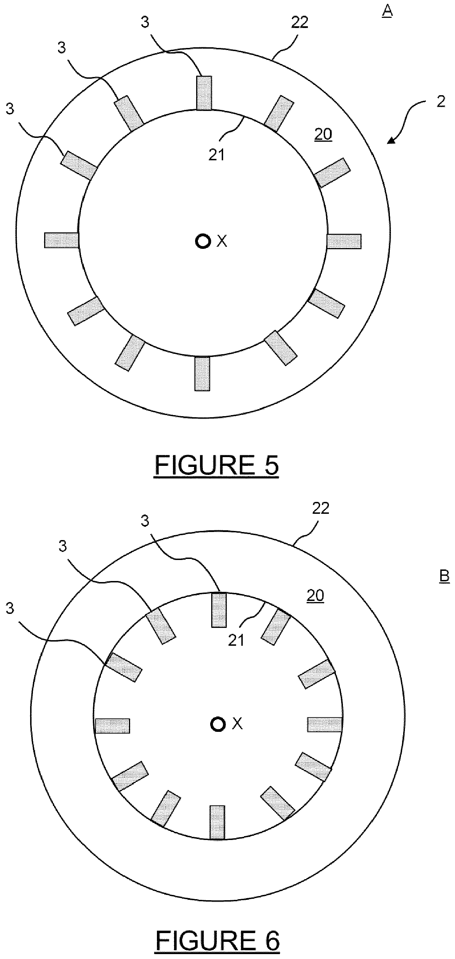

En référence à la figure 5, il est représenté une entrée d'air 2 comprenant plusieurs aubes de redresseur 3 qui sont réparties à la circonférence de l'entrée d'air 2 autour de l'axe X de manière à permettre d'améliorer la phase d'inversion de poussée. De manière préférée, le nombre des aubes de redresseur 3 est suffisamment grand pour permettre un redressement sur l'ensemble de la circonférence de l'entrée d'air 2 et suffisamment faible pour réduire le poids et la traînée. De préférence, lorsque le turboréacteur 1 comporte des aubes du type OGV, le nombre d'aubes de redresseur 3 pour la phase d'inversion de poussée est sensiblement égal au nombre d'aubes du type OGV.

De manière préférée, afin de modifier le redressement du flux d'air inverse de manière différente à la circonférence de l'entrée d'air, les aubes de redresseur 3 peuvent ne pas être identiques ou être déplacées selon des degrés de déploiement différents. Cela permet avantageusement de tenir compte de l'environnement circonférentiel de l'entrée d'air, en particulier pour limiter les nuisances acoustiques en orientant le flux d'air inverse.

De manière préférée, les aubes de redresseur 3 sont organisées en rangées, chaque rangée comportant une pluralité de aubes de redresseur 3 positionnées à une même distance radiale par rapport à l'axe X. De manière alternative, les aubes de redresseur 3 peuvent être positionnées à des distances radiales différentes afin de modifier le redressement du flux d'air inverse de manière différente à la circonférence de l'entrée d'air. A titre d'exemple, il est représenté une unique rangée sur la figure 5 mais il va de soi que le nombre de rangées pourrait être plus élevé.

La position axiale des aubes de redresseur 3, c'est-à-dire la distance avec la soufflante 11, peut varier en fonction des applications. En effet, plus les aubes de redresseur 3 sont proches de la soufflante 11, plus le redressement est efficace. A l'inverse, plus les aubes de redresseur 3 sont éloignées de la soufflante 11, plus le bruit généré est faible.

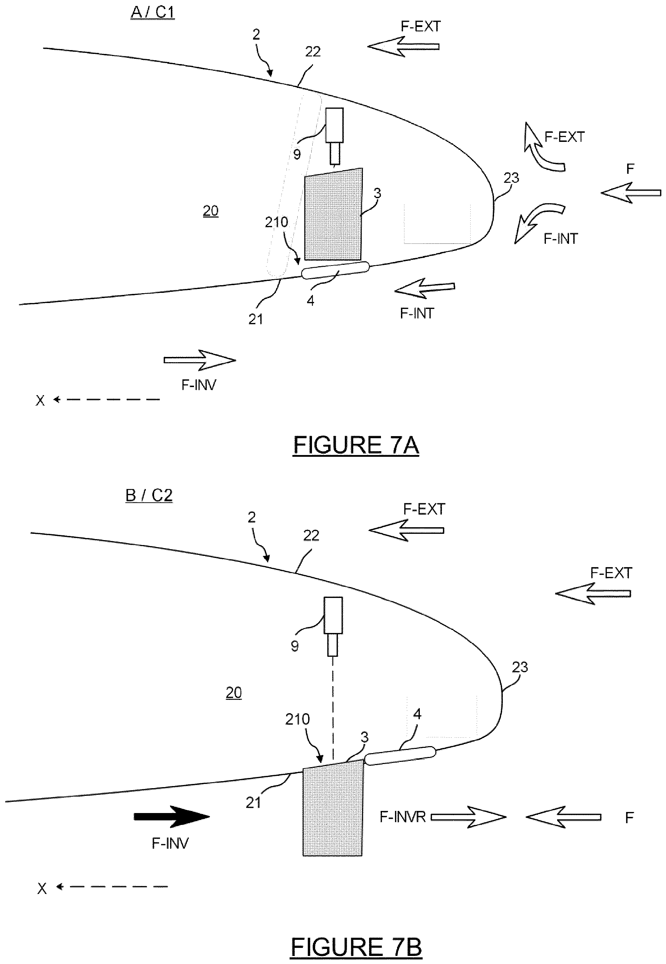

En référence aux figures 7A et 7B, il est représenté une entrée d'air 2 comportant une aube de redresseur 3 montée mobile selon une direction de déploiement radiale. Il va néanmoins de soi que la direction de déploiement pourrait comprendre une composante longitudinale ou azimutale, l'important étant que la direction de déploiement comporte au moins une composante radiale. Une direction de déploiement essentiellement radiale est néanmoins préférée étant donné qu'elle permet aux aubes de redresseur 3 de remplir une fonction analogue aux aubes OGV qui s'étendent radialement. La paroi intérieure 21 comporte une ouverture de passage 210 débouchant dans la cavité annulaire 20 dans laquelle se déplace l'aube de redresseur 3 en position déployée B. Les dimensions de l'ouverture de passage 210 sont déterminées de manière à minimiser le jeu avec l'aube de redresseur 3 en position déployée B. Cela permet de limiter la circulation du flux d'air inverse F-INV dans la cavité annulaire 20 en position déployée B.

Dans cet exemple, l'entrée d'air 2 comporte un organe de déplacement 9 afin de déplacer en translation l'aube de redresseur 3 de la position escamotée A à la position déployée B. A titre d'exemple, cet organe de déplacement 9 se présente sous la forme d'un organe de déplacement 9 qui est actif se présentant, par exemple, sous la forme d'un actionneur pneumatique, hydraulique, électrique ou autre afin de permettre un déplacement suite à la réception d'une instruction de commande d'un calculateur. De manière préférée, l'organe de déplacement 9 permet également de déplacer en translation l'aube de redresseur 3 de la position déployée B à la position escamotée A. L'entrée d'air 2 peut comporter un ou plusieurs organes de déplacement commandable 9.

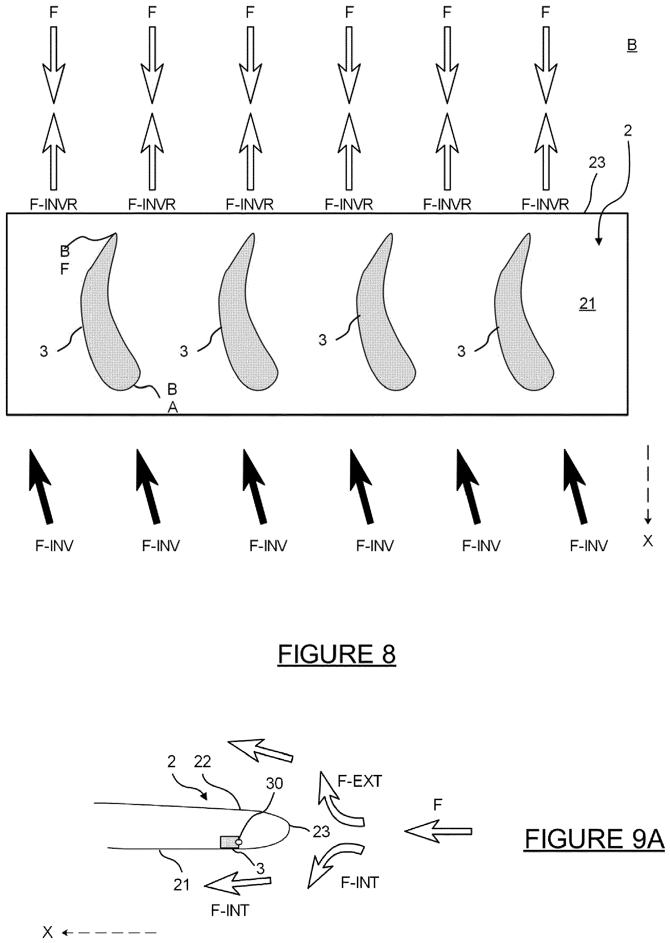

Comme illustré à la figure 8, l'aube de redresseur 3 comporte, dans un plan de section radiale, un bord d'attaque BA positionné en aval et un bord de fuite BF positionné en amont. De manière préférée, l'aube de redresseur possède un profil aérodynamique de manière à redresser le flux d'air inverse F-INV sur l'intrados et l'extrados de l'aube de redresseur 3 et obtenir un flux d'air inverse redressé F-INVR qui circule axialement.

Toujours en référence aux figures 7A et 7B, l'organe de déplacement commandable 9 permet de déplacer l'organe de liaison mobile 3 radialement vers l'intérieur de manière à ce que l'aube de redresseur 3 s'étende en saillie dans la circulation du flux d'air inverse F-INV qui est vrillé par la soufflante 11.

Selon un aspect optionnel de l'invention, en référence aux figures 7A et 7B, l'entrée d'air 2 comporte un organe de couverture 4 monté mobile entre une position d'utilisation C1, dans laquelle ledit organe de couverture 4 recouvre l'aube de redresseur 3 en position escamotée A de manière à assurer un profil aérodynamique lors de la poussée (Figure 7A), et une position de stockage C2, dans laquelle ledit organe de couverture 4 est décalé de sa position d'utilisation C1 afin que l'aube de redresseur 3 soit en position déployée B (Figure 7B). En position escamotée A, l'organe de couverture 4 recouvre l'ouverture de guidage 210 et ne la recouvre pas en position déployée B.

De manière préférée, l'organe de couverture 4 est dans un matériau identique à la paroi intérieure 21 et sa forme est choisie de sorte à être dans le prolongement de la paroi intérieure 21 afin que le profil aérodynamique de la lèvre d'air 2 reste inchangé lors de la poussée.

Dans l'exemple des figures 7A-7B, l'organe de couverture 4 est déplacé en translation le long de la paroi intérieure 21 vers l'amont, de la position d'utilisation C1 à la position de stockage C2. Il va cependant de soi que l'organe de couverture 4 pourrait posséder d'autres formes et être déplacé de manière différente, en particulier, selon une direction circonférentielle. Par ailleurs, l'organe de couverture 4 peut comprendre une ou plusieurs parties. En outre, le déplacement de l'organe de couverture 4 peut être réalisé par l'organe de déplacement 9 de l'aube de redresseur 3 ou par tout autre organe de déplacement.

Dans la position déployée B, comme illustré à la figure 7B et à la figure 8, les aubes de redresseur 3 agissent sur le flux d'air inverse F-INV afin de l'aligner axialement avec le flux d'air amont F et permettre une phase d'inversion de poussée optimale. L'action de la soufflante 11 peut ainsi participer de manière efficace à la phase d'inversion de poussée.

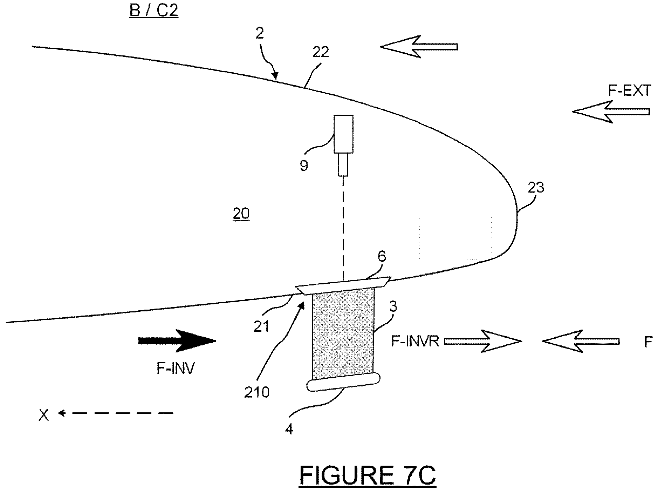

De manière alternative, en référence à la figure 7C, l'organe de couverture 4 est monté solidairement à l'extrémité intérieure de l'aube de redresseur 3 et est déplacé avec cette dernière dans le flux d'air inverse F-INV. Une telle forme de réalisation ne nécessite de déplacer que l'aube de redresseur 3, ce qui est avantageux.

Toujours en référence à la figure 7C, l'aube de redresseur 3 comporte, à son extrémité extérieure, un organe de fermeture 6 configuré pour combler au moins partiellement l'ouverture de passage 210 de la paroi intérieure 21 dans laquelle se déplace l'aube de redresseur 3 en position déployée B. Un tel organe de fermeture 6 permet avantageusement de limiter la circulation du flux d'air inverse F-INV dans la cavité annulaire 20 de l'entrée d'air 2, en particulier, via le jeu formé entre l'aube de redresseur 3 et l'ouverture de guidage 210. Il va de soi qu'un tel organe de fermeture 6 est également adaptable aux autres formes de réalisation. L'organe de fermeture 6 est de préférence solidaire de l'aube de redresseur 3.

Il a été représenté aux figures 7A-7C une aube de redresseur 3 qui est déployée selon une direction sensiblement radiale. Néanmoins, le déploiement des aubes de redresseur 3 pourrait être réalisé selon différentes cinématiques.

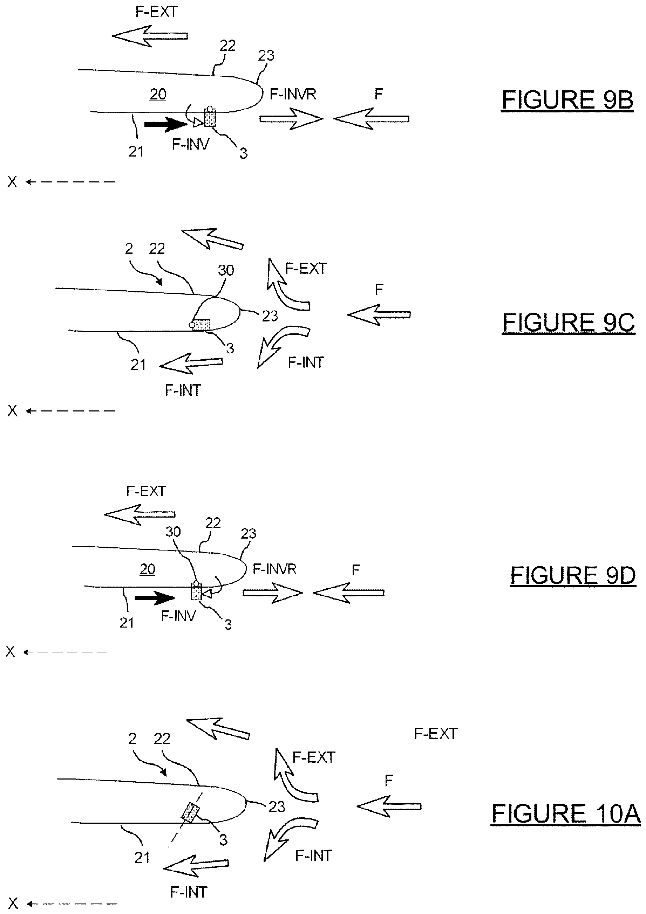

En référence aux figures 9A-9B, il est représenté une première cinématique en rotation dans laquelle l'aube de redresseur 3 est pivotée autour d'un axe d'articulation azimutal 30 vers l'amont. En position escamotée A (Figure 9A), l'aube de redresseur 3 est alignée longitudinalement vers l'aval puis basculée vers l'amont pour s'étendre sensiblement radialement en position déployée B (Figure 9B). En position déployée B, l'aube de redresseur 3 ne s'étend pas nécessairement radialement mais peut être inclinée vers l'aval ou vers l'amont.

De manière analogue, en référence aux figures 9C-9D, il est représenté une deuxième cinématique en rotation dans laquelle l'aube de redresseur 3 est pivotée autour d'un axe d'articulation azimutal 30 vers l'aval. En position escamotée A (Figure 9C), l'aube de redresseur 3 est alignée longitudinalement vers l'amont puis basculée vers l'aval pour s'étendre sensiblement radialement en position déployée B (Figure 9D). En position déployée B, l'aube de redresseur 3 ne s'étend pas nécessairement radialement mais peut être inclinée vers l'aval ou vers l'amont.

Il a été présenté une aube de redresseur entrainée en rotation selon un axe de rotation sensiblement orthogonal à l'axe X (rotation longitudinale) mais il va de soi que l'axe de rotation pourrait être sensiblement parallèle à l'axe X (rotation latérale). Selon cette alternative, l'aube de redresseur 3 est placée, de préférence, dans une cavité azimutale en position escamotée A, en particulier, plaquée contre la paroi intérieure 21.

Une cinématique en rotation est avantageuse étant donné qu'elle permet de limiter l'encombrement radial en position escamotée A. Il va de soi que l'aube de redresseur 3 pourrait également être déplacée selon une cinématique combinant une rotation et une translation.

Selon un aspect préféré de l'invention, l'aube de redresseur 3 forme une portion de la paroi intérieure 21 qui est pivotée en position déployée. Autrement dit, l'aube de redresseur 3 n'est pas située dans la cavité annulaire 20 formée entre la paroi intérieure 21 et la paroi extérieure 22.

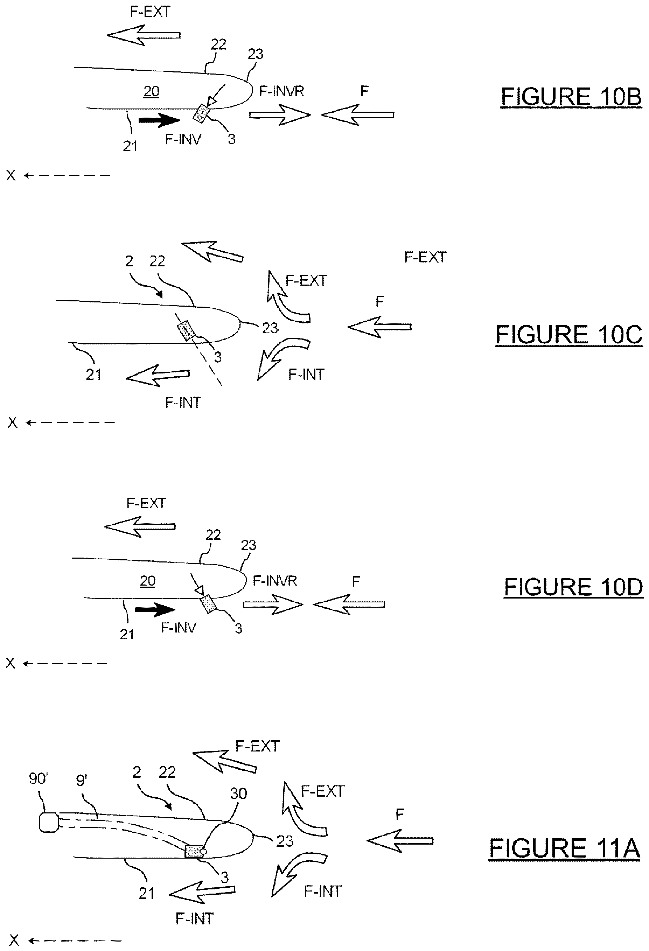

Il a été représenté aux figures 7A-7C une aube de redresseur 3 qui est déployée en translation selon une direction sensiblement radiale. Il va de soi qu'un déploiement selon un axe de translation incliné vers l'aval (Figures 10A-10B) ou vers l'amont (Figures 10A-10B) peut également être envisagé.

Selon un aspect de l'invention, le déploiement d'une aube de redresseur 3 peut être réalisé par un organe de déplacement qui est passif.

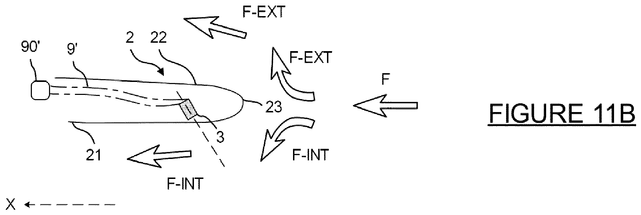

En référence aux figures 11A-11B, il est représenté un organe de déplacement passif se présentant sous la forme d'une conduite pneumatique 9' formée dans la cavité annulaire 20 et débouchant sur l'aube de redresseur 3 afin de la déplacer par aspiration ou soufflage entre la position escamotée et la position déployée.

De manière préférée, la conduite pneumatique 9' est reliée à une source de surpression 90' qui permet par aspiration, du fait de la différence de pression entre la veine d'air et la conduite pneumatique 9', un déplacement de l'aube de redresseur 3. La pression dans la veine d'air est plus faible du fait de l'accélération du flux d'air inverse F-INV par la soufflante 11. Dans cet exemple, le déploiement par aspiration peut être partiel, les forces aérodynamiques dans la veine d'air permettant un déploiement complet. Un organe de déplacement passif convient aussi bien pour une cinématique en translation qu'en rotation.

Selon un aspect de l'invention, la conduite pneumatique 9' est alimentée par le flux d'air inverse. De manière préférée, lors d'une phase de poussée, le flux d'air inverse n'est plus présent, ce qui déplace automatiquement l'aube de redresseur 3 en position escamotée A.

On décrit par la suite un procédé d'utilisation de l'entrée d'air 2 selon l'invention précédemment présentée. Par souci de clarté, il est présenté le déplacement d'une unique aube de redresseur 3 mais il va de soi que plusieurs aubes de redresseur 3 peuvent être déplacées de manière concomitante ou séquentielle.

Lors de la poussée, la soufflante 11 permet d'accélérer un flux d'air intérieur F-INT de l'amont vers l'aval qui est guidé par l'entrée d'air 2 ayant un profil aérodynamique favorisant la poussée. Les aubes de redresseur 3 sont dans la position escamotée A lors de la poussée du turboréacteur 1, afin que l'entrée d'air 2 possède un profil aérodynamique de manière à guider le flux d'air. L'utilisation d'un organe de couverture 4 permet d'assurer un profil aérodynamique optimal lors de la poussée.

Lors d'une phase d'inversion de poussée dudit turboréacteur 1, suite à une modification du pas des aubes de soufflante 11, le ou les organes de déplacement 9 déplacent les aubes de redresseur 3 dans une position déployée B, dans laquelle les aubes de redresseur 3 s'étendent en saillie de la paroi intérieure 21 selon une direction radialement intérieure afin de redresser le flux d'air inverse F-INV de la paroi intérieure 21 pour favoriser la phase d'inversion de poussée.

De manière avantageuse, un tel procédé d'utilisation procure à l'aéronef de bonnes performances à la fois en poussée, où le flux d'air intérieur F-INT est conservé inchangé, et en poussée inverse, où les aubes de redresseur 230 permettent de dévriller le flux d'air inverse F-INV. En référence à la figure 8, le flux d'air inverse redressé F-INVR circule selon la même direction mais dans un sens opposé au flux d'air amont F, ce qui assure une phase d'inversion de poussée efficace.

Selon un aspect de l'invention, seule une partie des aubes de redresseur 3 est déplacée au cours de l'étape de déplacement pour s'adapter à différentes conditions de fonctionnement, par exemple, lors du freinage.

Grâce à l'invention, les performances du turboréacteur 1 sont significativement améliorées lors de la phase d'inversion de poussée tout en maintenant les performances existantes lors de la phase de poussée.

## Revendications

1. Procédé d'utilisation d'un turboréacteur (1) d'aéronef s'étendant selon un axe X orienté de l'amont vers l'aval dans lequel circule un flux d'air intérieur (F-INT) de l'amont vers l'aval lors d'une phase de poussée et un flux d'air inverse (F-INV) de l'aval vers l'amont lors d'une phase d'inversion de poussée, ledit turboréacteur (1) comportant une soufflante (11), comprenant une pluralité d'aubes à pas variable, configurée pour réaliser une inversion de poussée et une nacelle comportant une entrée d'air (2) s'étendant de manière circonférentielle autour de l'axe X et comprenant une paroi intérieure (21) tournée vers l'axe X et configurée pour guider le flux d'air intérieur (F-INT) et le flux d'air inverse (F-INV) et une paroi extérieure (22), opposée à la paroi intérieure (21) et configurée pour guider un flux d'air extérieur (F-EXT), la paroi intérieure (21) et la paroi extérieure (22) étant reliées entre elles par une lèvre d'entré d'air (23) de manière à former une cavité annulaire (20), l'entrée d'air (2) comprenant une pluralité d'aubes de redresseur (3) positionnées en amont de la soufflante (11), chaque aube de redresseur (3) étant montée mobile entre :
- une position escamotée (A) pour favoriser la phase de poussée et
- une position déployée (B) dans laquelle l'aube de redresseur (3) s'étend en saillie de la paroi intérieure (21) selon une direction radialement intérieure afin de redresser le flux d'air inverse (F-INV) de la paroi intérieure (21) pour favoriser une phase d'inversion de poussée, et dans laquelle l'aube de redresseur (3) comprend, dans un plan de section radiale, un bord d'attaque épais (BA) positionné en aval et un bord de fuite effilé (BF) positionné en amont.
- procédé dans lequel au moins une aube de redresseur (3) est en position escamotée (A) lors d'une phase de poussée du turboréacteur (1) le procédé comportant, lors d'une phase d'inversion de poussée dudit turboréacteur (1), une modification du pas des aubes de la soufflante et une étape de déplacement de l'aube de redresseur (3) en position déployée (B).

2. Procédé selon la revendication 1, dans lequel les aubes de redresseur (3) de l'entrée d'air (2) du turboréacteur (1) sont réparties à la circonférence de l'entrée d'air (2) autour de l'axe X.

3. Procédé selon l'une des revendications 1 à 2, dans lequel l'entrée d'air (2) du turboréacteur (1) comporte au moins un organe de déplacement (9) configuré pour déplacer l'aube de redresseur (3) de la position escamotée (A) à la position déployée (B).

4. Procédé selon l'une des revendications 1 à 3, dans lequel l'aube de redresseur (3) de l'entrée d'air (2) du turboréacteur (1) est montée en translation et/ou en rotation dans l'entrée d'air (2).

5. Procédé selon l'une des revendications 1 à 4, dans lequel l'aube de redresseur (3) de l'entrée d'air (2) du turboréacteur (1) comprend un profil aérodynamique.

6. Procédé selon l'une des revendications 1 à 5, dans lequel l'entrée d'air (2) du turboréacteur (1) comprend un organe de couverture (4) monté mobile entre une position d'utilisation (C1), dans laquelle ledit organe de couverture (4) recouvre l'aube de redresseur (3) en position escamotée (A) de manière à assurer un profil aérodynamique lors de la poussée, et une position de stockage (C2), dans laquelle ledit organe de couverture (4) est décalé de sa position d'utilisation (C1) afin que l'aube de redresseur (4) soit en position déployée (A).

7. Procédé selon l'une des revendications 1 à 6, dans lequel l'aube de redresseur (3) de l'entrée d'air (2) du turboréacteur (1) s'étend dans la cavité annulaire (20) de l'entrée d'air (2) en position escamotée (A).

8. Procédé selon l'une des revendications 1 à 7, dans lequel, le turboréacteur (1) comportant des aubes de soufflante (11), la longueur d'une aube de redresseur (3) est inférieure à 1/3 de la longueur d'une aube de soufflante (11).

## Patentansprüche

1. Verfahren zur Verwendung eines Turbotriebwerks (1) eines Fluggeräts, das sich in einer von stromaufwärts nach stromabwärts ausgerichteten Achse X erstreckt, in dem ein innerer Luftstrom (F-INT) von stromaufwärts nach stromabwärts bei einer Schubphase und ein umgekehrter Luftstrom (F-INV) von stromabwärts nach stromaufwärts bei einer Schubumkehrphase zirkuliert, wobei das Turbotriebwerk (1) ein Gebläse (11) aufweist, das eine Vielzahl von verstellbaren Schaufeln aufweist, das dazu ausgelegt ist, eine Schubumkehr durchzuführen, und eine Gondel, die einen Lufteinlass (2) aufweist, der sich umfangmäßig um die Achse X erstreckt und eine Innenwand (21) umfasst, die zur Achse X zeigt und dazu ausgelegt ist, den inneren Luftstrom (F-INT) und den umgekehrten Luftstrom (F-INV) zu führen, und eine Außenwand (22), die der Innenwand (21) gegenüberliegend und dazu ausgelegt ist, einen äußeren Luftstrom (F-EXT) zu führen, wobei die Innenwand (21) und die Außenwand (22) durch eine Lufteingangslippe (23) derart miteinander verbunden sind, dass ein ringförmiger Hohlraum (20) gebildet wird, wobei der Lufteinlass (2) eine Vielzahl von Gleichrichterschaufeln (3) umfasst, die dem Gebläse (11) vorgelagert positioniert sind, wobei jede Gleichrichterschaufel (3) beweglich angebracht ist zwischen:
- einer eingezogenen Position (A), um die Schubphase zu begünstigen, und
- einer ausgeklappten Position (B), in der sich die Gleichrichterschaufel (3) in einer radial inneren Richtung aus der Innenwand (21) herausragend erstreckt, um den umgekehrten Luftstrom (F-INV) von der Innenwand (21) umzuleiten, um eine Schubumkehrphase zu begünstigen, und wobei die Gleichrichterschaufel (3) in einer radialen Schnittebene eine stromabwärts positionierte dicke Vorderkante (BA) und eine stromaufwärts positionierte spitz zulaufende Hinterkante (BF) umfasst,
wobei bei dem Verfahren bei einer Schubphase des Turbotriebwerks (1) mindestens eine Gleichrichterschaufel (3) in eingezogener Position (A) ist, wobei das Verfahren bei einer Schubumkehrphase des Turbotriebwerks (1) eine Änderung der Verstellung der Schaufeln des Gebläses und einen Schritt der Verlagerung der Gleichrichterschaufel (3) in ausgeklappte Position (B) aufweist.

2. Verfahren nach Anspruch 1, wobei die Gleichrichterschaufeln (3) des Lufteinlasses (2) des Turbotriebwerks (1) auf dem Umfang des Lufteinlasses (2) um die Achse X verteilt sind.

3. Verfahren nach einem der Ansprüche 1 bis 2, wobei der Lufteinlass (2) des Turbotriebwerks (1) mindestens ein Verlagerungsorgan (9) aufweist, das dazu ausgelegt ist, die Gleichrichterschaufel (3) aus der eingezogenen Position (A) in die ausgeklappte Position (B) zu verlagern.

4. Verfahren nach einem der Ansprüche 1 bis 3, wobei die Gleichrichterschaufel (3) des Lufteinlasses (2) des Turbotriebwerks (1) translatorisch und/oder rotatorisch im Lufteinlass (2) angebracht ist.

5. Verfahren nach einem der Ansprüche 1 bis 4, wobei die Gleichrichterschaufel (3) des Lufteinlasses (2) des Turbotriebwerks (1) ein aerodynamisches Profil umfasst.

6. Verfahren nach einem der Ansprüche 1 bis 5, wobei der Lufteinlass (2) des Turbotriebwerks (1) ein Abdeckorgan (4) umfasst, das zwischen einer Benutzungsposition (C1), in welcher das Abdeckorgan (4) die Gleichrichterschaufel (3) in eingezogener Position (A) derart abdeckt, um beim Schub ein aerodynamisches Profil sicherzustellen, und einer Lagerposition (C2), in welcher das Abdeckorgan (4) aus seiner Benutzungsposition (C1) versetzt ist, damit die Gleichrichterschaufel (4) in ausgeklappter Position (A) ist, beweglich angebracht ist.

7. Verfahren nach einem der Ansprüche 1 bis 6, wobei sich die Gleichrichterschaufel (3) des Lufteinlasses (2) des Turbotriebwerks (1) in eingezogener Position (A) im ringförmigen Hohlraum (20) des Lufteinlasses (2) erstreckt.

8. Verfahren nach einem der Ansprüche 1 bis 7, wobei, wobei das Turbotriebwerk (1) Gebläseschaufeln (11) aufweist, die Länge einer Gleichrichterschaufel (3) 1/3 kleiner als die Länge einer Gebläseschaufel (11) ist.

## Claims

1. A method for operating an aircraft turbojet engine (1) extending along an axis X oriented from upstream to downstream in which an internal air flow (F-INT) circulates from upstream to downstream during a thrust phase and a reverse air flow (F-INV) from downstream to upstream during a thrust reversal phase, said turbojet engine (1) comprising a fan (11) comprising a plurality of variable-pitch vanes, configured to perform a thrust reversal, and a nacelle comprising an air intake (2) extending circumferentially about axis X, and comprising an internal wall (21) pointing to axis X and configured to guide the internal air flow (F-INT) and the reverse air flow (F-INV), and an external wall (22) opposite to the internal wall (21) and configured to guide an external air flow (F-EXT), the internal wall (21) and the external wall (22) being connected to each other by an air intake lip (23) so as to form an annular cavity (20), the air intake (2) comprising a plurality of guide vanes (3) positioned upstream of the fan (11), each guide vane (3) being movably mounted between
- a retracted position (A) to promote the thrust phase and
- an extended position (B) in which the guide vane (3) projectingly extends from the internal wall (21) in a radially internal direction in order to guide the reverse air flow (F-INV) from the internal wall (21) to promote a thrust reversal phase, and in which the guide vane (3) comprises, in a radial section plane, a thick leading edge (BA) positioned downstream and a thin trailing edge (BF) positioned upstream,
- method wherein at least one guide vane (3) is in the retracted position (A) during a thrust phase of the turbojet engine (1), the method comprising, during a thrust reversal phase of said turbojet engine (1), a change in fan blade pitch and a step of moving the guide vane (3) into the extended position (B).

2. The method according to claim 1, wherein the guide vanes (3) of the air intake (2) of the turbojet engine (1) are distributed at the circumference of the air intake (2) about axis X.

3. The method according to any of claims 1 to 2, wherein the air intake (2) of the turbojet engine (1) comprises at least one moving member (9) configured to move the guide vane (3) from the retracted position (A) to the extended position (B).

4. The method according to any of claims 1 to 3, wherein the guide vane (3) of the air intake (2) of the turbojet engine (1) is translationally and/or rotationally mounted in the air intake (2).

5. The method according to any of claims 1 to 4, wherein the guide vane (3) of the air intake (2) of the turbojet engine (1) comprises an aerodynamic profile.

6. The method according to one of claims 1 to 5, wherein the air intake (2) of the turbojet engine (1) comprises a cover member (4) movably mounted between an operating position (C1), in which said cover member (4) covers the guide vane (3) in the retracted position (A) so as to ensure an aerodynamic profile during thrust, and a storage position (C2), in which said cover member (4) is offset from its operating position (C1) so that the guide vane (3) is in the extended position (A).

7. The method according to any of claims 1 to 6, wherein the guide vane (3) of the air intake (2) of the turbojet engine (1) extends into the annular cavity (20) of the air intake (2) in the retracted position (A).

8. The method according to any of claims 1 to 7, wherein, with the turbojet engine (1) comprising fan vanes (11), the length of a guide vane (3) is less than 1/3 of the length of a fan vane (11).
